# EUROPEAN PATENT SPECIFICATION

(11) **EP 2 247 787 B1**
(45) Date of publication and mention of the grant of the patent: **28.11.2012**
(21) Application number: 09714530.4
(22) Date of filing: 25.02.2009
(51) Int. Cl.: D21H 13/26, B32B 3/12, B64D 33/00

(54) **CORE HAVING A HIGH SHEAR STRENGTH AND ARTICLES MADE FROM SAME**
WABENKERN MIT HOHER SCHERFESTIGKEIT UND DARAUS HERGESTELLTE ARTIKEL
ÂME À FORTE RÉSISTANCE AU CISAILLEMENT, ET ARTICLES AINSI RÉALISÉS

(30) Priority: 26.02.2008 US 67215 P
(43) Date of publication of application: 10.11.2010
(73) Proprietor: E. I. du Pont de Nemours and Company, Wilmington, DE 19898 (US)
(72) Inventor: LEVIT, Mikhail, R., Glen Allen VA 23059 (US); KHAN, Subhotosh, Midlothian VA 23114 (US)
(74) Representative: Dannenberger, Oliver Andre
(86) International application number: PCT/US2009/035093
(87) International publication number: WO 2009/108672

(56) References cited:
- US-A- 4 729 921
- US-A- 5 137 768

## Description

### BACKGROUND OF THE INVENTION

### Field of the Invention.

This invention relates to a high shear strength core made from a p-aramid fiber paper.

### Description of Related Art.

Core structures for sandwich panels from p-aramid fiber papers or wet-laid nonwovens, mostly in the form of honeycomb, are used in different applications but primarily in the aerospace industry where strength to weight or stiffness to weight ratios have very high values. Traditionally, such core structures have been optimized for maximum shear modulus (stiffness) of the core. For example, United States Patent No. 5,137,768 to Lin describes a honeycomb core made from high-density paper comprising 50 wt.% or more of p-aramid fiber in the form of floc (cut fiber) with the rest of the composition being a binder and other additives.

United States Patent No. 6,544,622 to Nomoto describes a honeycomb core made from p-aramid fiber paper having at least 150 wt% p-aramid pulp and up to 40 wt.% of p-aramid floc from the total quantity of the floc and pulp in the composition. A resin is used as a binder for these fibers. However the shear strength of this honeycomb core is lower than the shear strength of core of the same density made from commercially available paper containing only p-aramid floc and m-aramid fibrids and produced according to United States Patent No. 5,137,768 to Lin. There are composite material applications such as aircraft landing gear doors, structures with cut outs and other highly loaded structures in which shear strength is a primary design criteria. Therefore what is needed is a lightweight core structure optimized for the maximum shear strength to weight ratio.

### BRIEF SUMMARY OF THE INVENTION

This invention relates to a honeycomb core comprising a plurality of interconnected walls having surfaces that define a plurality of honeycomb cells, wherein the cell walls are formed from a paper which, prior to impregnation with a resin, comprises 50-85 parts by weight p-aramid floc, 10-40 parts by weight p-aramid pulp, and 5-30 parts by weight of aramid fibrids.

This invention also relates to a structural sandwich panel comprising a resin impregnated honeycomb core having at least one facesheet attached to both exterior surfaces of said core wherein the cell walls of the core are formed from a paper comprising 10 to 40 parts by weight of para- aramid pulp, 50 to 85 parts by weight of para-aramid floc and 5 to 30 parts by weight of aramid fibrids.

### BRIEF DESCRIPTION OF THE DRAWINGS

Figures 1 a and 1 b are representations of views of a hexagonal shaped honeycomb.
Figure 2 is a representation of another view of a hexagonal cell shaped honeycomb.
Figure 3 is an illustration of honeycomb provided with facesheets.
Figure 4 is a graph comparing the shear strength of core made from the invention with prior art materials.

### DETAILED DESCRIPTION OF THE INVENTION

This invention relates to a honeycomb core made from a p-aramid fiber paper wherein the paper, prior to impregnation with a resin, comprises 50-85 parts by weight of p-aramid floc, 10-40 parts by weight of p-aramid pulp and 5-30 parts by weight of aramid fibrids.

More preferably, the invention relates to a honeycomb core made from a p-aramid fiber paper wherein the paper, prior to impregnation with a resin, comprises 55-80 parts by weight of p-aramid floc, 10-35 parts by weight of p-aramid pulp and 10-20 parts by weight of aramid fibrids. It was surprisingly discovered that such core, when impregnated with resin, provides superior shear strength in comparison with other known p-aramid fiber paper based cores in which the paper, before impregnation, comprises only p-aramid fiber in the form of floc or in which majority of p-aramid fiber is in the form of pulp.

Such improvement in the shear strength of the core is also evident from the tensile index of the impregnated paper of the cell walls of the core structure. At a 3 to 2 weight ratio between the p-aramid paper of the cell wall and resin coated onto or into the paper, the tensile index of such impregnated paper is at least 95 N*m/g. Tensile index values of resin coated paper will vary depending on the relative amounts of paper and resin. As the percentage of resin increases, the tensile index value will decrease. For this invention, the weight ratio between the p-aramid paper of the cell wall and resin coated onto or into the paper is in the range from 7:3 to 2:8.

The disclosed composition of the cell wall paper also helps to keep an optimum level of the paper and cell wall permeability before impregnation, which can be quantified by a Gurley air resistance of from 3 to 40 seconds per 100 milliliters. Such parameters guarantee not only the superior properties of the final core, but also a robust and efficient process for the core manufacturing.

In the preferred embodiment of this invention, the p-aramid paper, which is used to make the core, has a Gurley air resistance from 3 and 40 seconds per 100 milliliters. If the Gurley resistance is less than 3 seconds, that can cause problems during the node line adhesive prinking operation in honeycomb core manufacturing. If the Gurley air resistance is more than 40 seconds, the resin impregnation into the paper during manufacturing is too slow.

Floc comprises generally short fibers made by cutting continuous filament fibers into short lengths without significant fibrillation; and the lengths of the short fibers can be of almost any length. An example of a suitable range is from 1 mm to 12 mm for a reinforcing fiber and from 5mm to 800 mm for a staple fiber that is spun into a yam. Short fibers suitable for use in the present invention are the reinforcing fibers disclosed in United States Patent No. 5,474,842 to Hoiness.

The term "pulp", as used herein, means particles of fibrous material having a stalk and fibrils extending generally therefrom, wherein the stalk is generally columnar and 10 to 50 micrometers in diameter and the fibrils are fine, hair-like members generally attached to the stalk measuring only a fraction of a micrometer or a few micrometers in diameter and 10 to 100 micrometers long.

The term "fibrids" as used herein, means a very finely-divided polymer product of small, filmy, essentially two-dimensional, particles known having a length and width of 100 to 1000 micrometers and a thickness of 0.1 to 1 micrometer.

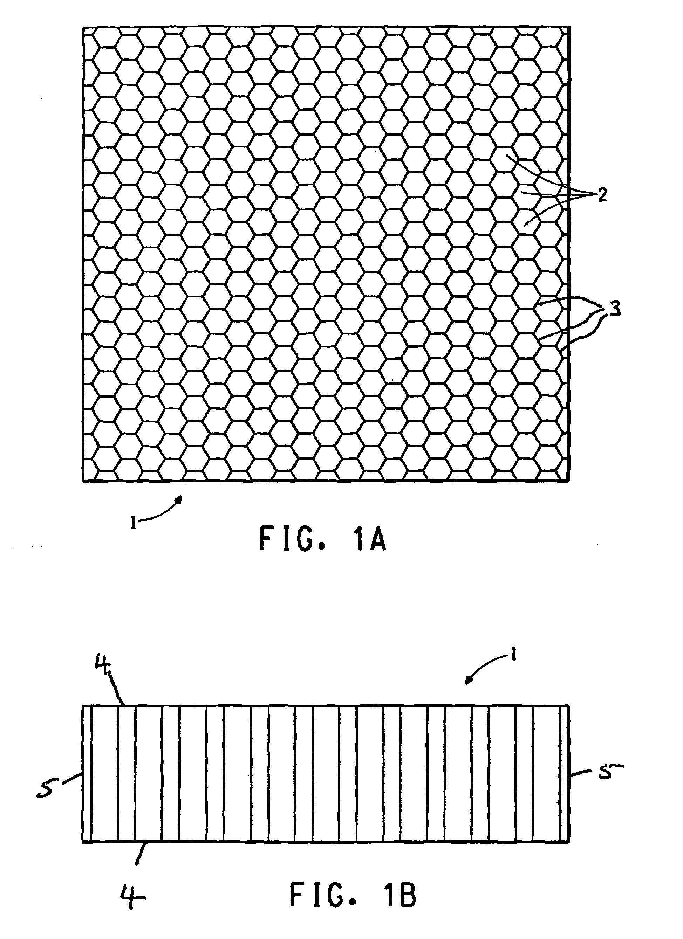

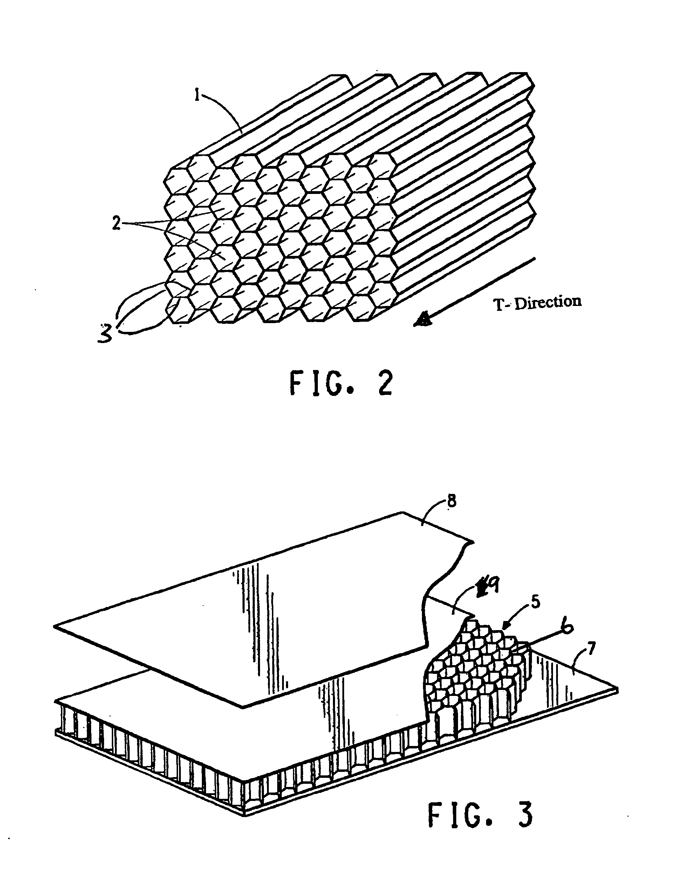

Figure 1a is a plan view illustration of one honeycomb 1 of this invention and shows cells 2 formed by cell walls 3. Figure 1b is an elevation view of the honeycomb shown in Figure 1 a and shows the two exterior surfaces, or faces 4 formed at both ends of the cell walls. The core also has edges 5. Figure 2 is a three-dimensional view of the honeycomb. Shown is honeycomb 1 having hexagonal cells 2 and cell walls 3. The "T" dimension or the thickness of the honeycomb is shown in Figure 2. Hexagonal cells are shown; however, other geometric arrangements are possible with square, over-expanded and flex-core cells being among the most common possible arrangements. Such cell types are well known in the art and reference can be made to Honeycomb Technology by T. Bitzer (Chapman & Hall, publishers, 1997) for additional information on possible geometric cell types.

Figure 3 shows a structural sandwich panel 5 assembled from a honeycomb core 6 with face sheets 7 and 8, attached to the two exterior surfaces of the core. The preferred face sheet material is a prepreg, a fibrous sheet impregnated with thermoset or thermoplastic resin although metallic face sheets may also be utilized. With metallic face sheets, and in some circumstances with prepreg, an adhesive film 9 is also used. Normally there are at least two prepreg skins on either side of the core.

The thickness of the paper used in this invention is dependent upon the end use or desired properties of the core structure and in some embodiments is from 1.0 to 20 mils (25 to 500 micrometers) thick. More preferably, the thickness is from 1.5 to 4 mils (38 to 100 micrometers). In some embodiments, the basis weight of the paper is from 0.5 to 6 ounces per square yard (15 to 200 grams per square meter).

As employed herein the term aramid means a polyamide wherein at least 85% of the amide (-CONH-) linkages are attached directly to two aromatic rings. Additives can be used with the aramid. In fact, it has been found that up to as much as 10 percent, by weight, of other polymeric material can be blended with the aramid or that copolymers can be used having as much as 10 percent of other diamine substituted for the diamine of the aramid or as much as 10 percent of other diacid chloride substituted for the diacid chloride of the aramid. Para aramid fibers and various forms of these fibers are available from E.I. du Pont de Nemours and Company, Wilmington, Delaware under the trademark Kevlar® and from Teijin, Ltd., under the trademark Twaron®.

The paper of the core of this invention can include small amounts of inorganic particles including mica, vermiculite, and the like; the addition of these performance enhancing additives being to impart properties such as improved fire resistance, thermal conductivity, dimensional stability, and the like to the paper and the final core structure.

The paper used to make the honeycomb core of this invention can be formed on equipment of any scale, from laboratory screens to commercial-sized papermaking machinery, including such commonly used machines as Fourdrinier or inclined wire paper machines. A typical process involves making a dispersion of fibrous material such as floc and/or pulp and fibrids in an aqueous liquid, draining the liquid from the dispersion to yield a wet composition and drying the wet paper composition. The dispersion can be made either by dispersing the fibers and then adding the fibrids or by dispersing the fibrids and then adding the fibers. The final dispersion can also be made by combining a dispersion of fibers with a dispersion of the fibrids; the dispersion can optionally include other additives such as inorganic materials. The concentration of fibers from the floc and pulp in the dispersion can range from 0.01 to 1.0 weight percent based on the total weight of the dispersion. An example of a suitable range for fibrid concentration is that it should be equal to or less than 30 weight percent based on the total weight of solids. In a typical process, the aqueous liquid of the dispersion is generally water, but may include various other materials such as pH-adjusting materials, forming aids, surfactants, defoamers and the like. The aqueous liquid is usually drained from the dispersion by conducting the dispersion onto a screen or other perforated support, retaining the dispersed solids and then passing the liquid to yield a wet paper composition. The wet composition, once formed on the support, is usually further dewatered by vacuum or other pressure forces and further dried by evaporating the remaining liquid.

In one preferred embodiment, the fiber and the fibrids can be slurried together to form a mix that is converted to paper on a wire screen or belt. Reference is made to United States Patents 4,698,267 and 4,729,921 to Tokarsky; 5,026, 456 to Hesler et al.; 5,223,094 and 5,314,742 to Kirayoglu et al for illustrative processes for forming papers from aramid fibers and aramid fibrids.

Once the paper is formed, it may or may not be calendered depending on the final desired density and thickness. In the latter case, some adjustments of density can be performed during forming by optimizing vacuum on the forming table and pressure in wet presses. An optional final step in the paper manufacturing can include a surface treatment of the paper in a corona or plasma atmosphere to further improve mechanical properties of the core structure.

Floc is generally made by cutting continuous spun filaments into specific-length pieces. If the floc length is less than 2 millimeters, it is generally too short to provide a paper with adequate strength; if the floc length is more than 25 millimeters, it is very difficult to form uniform wet-laid webs. Floc having a diameter of less than 5 micrometers, and especially less than 3 micrometers, is difficult to produce with adequate cross sectional uniformity and reproducibility; if the floc diameter is more than 20 micrometers, it is very difficult to form uniform papers of light to medium basis weights.

The preferred pulp material is p-aramid however a blend of p-aramid with other synthetic or natural fibers such as liquid crystal polyester, polyareneazole, meta-aramid, and cellulose can be utilized. When a pulp blend is used, the total weight of pulp material is still in the range of 10 -40 parts by weight. One illustrative process for making aramid pulp is disclosed in United States Patent No. 5,Il84,136 to Haines et al.

Fibrids are typically made by streaming a polymer solution into a coagulating bath of liquid that is immiscible with the solvent of the solution. The stream of polymer solution is subjected to strenuous shearing forces and turbulence as the polymer is coagulated. The fibrid material of this invention can be selected from meta or para-aramid or blends thereof. More preferably, the fibrid is a meta-aramid.

Processes for converting the web substrates described above into honeycomb core are well known to those skilled in the art and include expansion and corrugation. The expansion process is particularly well suited for making core from paper. Such processes are further detailed on page 721 of the Engineered Materials Handbook, Volume 1 - Composites, ASM International, 1988. The paper web can be coated with a resin before or after formation of the honeycomb. Resin can be employed which is crosslinked after application to the paper to optimize final properties such as stiffness and strength. Examples of resins include epoxy, phenolic, acrylic, polyimide and mixtures thereof with phenolic being preferred. United States Military Specification MIL-R-9299C specifies appropriate resin properties. The final mechanical strength of core is result of a combination of several factors. The principal known contributors are paper composition and thickness, cell size, and final core density such as after coating with resin. Cell size is the diameter of an inscribed circle within the cell of a honeycomb core. For p-aramid core, typical cell sizes range from 1/8" - 1/4" (3.2 mm - 6.2 mm) but other sizes are possible. Typical final core densities are in the range of 38 - 96 kg/m³.

For the same cell size, the same final core density and the same resin content, the core of the current invention has improved shear strength in comparison with other cores from p-aramid fiber paupers known in the art.

### TEST METHODS

Paper density was calculated using the paper thickness as measured by ASTM D374-99 and the basis weight as measured by ASTM D646-96. Fiber denier is measured using ASTM D1907-07.

Gurley Porosity for papers was determined by measuring air resistance in seconds per 100 milliliters of cylinder displacement for 6.4 square centimeters circular area of a paper using a pressure differential of 1.22 kPa in accordance with TAPPI T460.

Tensile Index of resin impregnated paper was determined on an Instron-type testing machine in accordance with ASTM D 828 using test specimens 2.54 cm wide and a gage length of 18 cm. The reported number was an arithmetic average of the corresponding numbers in the machine and cross directions of the paper.

Shear strength of the core was measured in accordance with ASTM C273.

### EXAMPLES

### Example 1

A p-aramid fiber paper comprised of KEVLAR® 49 floc, KEVLAR® pulp, and NOMEX® fibrids was formed on conventional paper forming equipment. The composition of the paper was 69 weight % KEVLAR® floc, 14 weight % of KEVLAR® pulp, and 17 weight % NOMEX® fibrids. The KEVLAR® floc had a nominal filament linear density of 1.5 denier per filament (1.7 dtex per filament) and a 6.4 mm cut length. The KEVLAR® pulp was produced from the described floc by high shear refining to a Canadian Standard Freeness (CSF) of about 180 ml. The NOMEX® fibrids were made as described in US Patent 3,756,908 to Gross. The paper was then calendered under 2600 N/cm of linear pressure at 330° C. This produced the final paper with a thickness of 48 micrometers, a density of 0.85 g/cm³ a basis weight of 1.2 oz/yd² (40.7 g/m²), and Gurley air resistance of 20 seconds per 100 milliliters

A 25 cm x 20 cm (10 inch x 8 inch) sample of the paper was dipped in a solution of Plyophen® 23900 phenolic resin supplied by Durez Corporation, Novi, MI. After dipping, an excess of the resin was removed by blotting paper and the impregnated paper was heat treated to cure the resin using a step cure cycle of 15 minutes at 82°C, 15 minutes at 121°C, and 60 minutes at 182°C. The dipping and curing steps were repeated for the second time. The resin content in the final impregnated paper was about 40 wt. % of the total weight of paper plus resin. The tensile index of the resin coated paper was measured and found to be 100 N*m/g.

A honeycomb was then formed from the calendered paper. Node lines of solvated adhesive were applied to the paper surface at a width of 2 mm and a pitch of 5 mm and the solvent removed.

The sheet with the adhesive node lines was cut into 500 mm lengths. A plurality of sheets were stacked one on top of the other, such that each of the sheets was shifted to the other by half a pitch or a half the interval of the applied adhesive node lines. The shift occurred alternately to one side or the other, so that the final stack is uniformly vertical. The number of stacked sheets was then hot-pressed between plates at the softening point of the adhesive, causing the adhesive node lines to flow; once the heat was removed the adhesive hardened to bond the sheets with each other. The bonded aramid sheets were then expanded in the direction counter to the stacking direction to form cells having an equilateral cross section. Each of the sheets were extended between each other such that the sheets were folded along the edges of the bonded node lines and the portions not bonded are extended in the direction of the tensile force to separate the sheets from each other. A frame was used to expand and hold the honeycomb in the expanded shape. The expanded cell size was 3.2 mm. After expansion, the honeycomb block, was heat treated in an oven to fix or set the block in its expanded shape.

The expanded honeycomb was then placed in a bath containing solvent-based MIL-R-9299C standard phenolic resin. The phenolic resin was used in a liquid form wherein the resin was dissolved in ethanol. The resin adhered to and coated the interior surface of the cell walls as well as penetrating into the pores of the paper. After impregnating with resin, the honeycomb was taken out from the bath and was dried in a drying furnace by hot air to remove the solvent and cure the phenolic resin. The impregnation step in the resin bath and the drying step in the drying furnace were repeated for 4 times with cutting off/sampling the slice after each impregnation step to produce core samples of varying density. The shear strength properties of the produced honeycomb core samples are shown in Table 1. The shear data presented is the sum of the shear in two directions, L and W. These are terms well understood in the art e.g. Manufacturing Processes for Advanced Composites by F.C. Campbell, Elsevier, p 271.

### Comparative Example 1

A 48 micrometer thick p-aramid fiber paper comprised of 81% KEVLAR® floc and 19% NOMEX® fibrids and made according to United States Patent No. 5,137,768 was used for the production of honeycomb samples similar to Example 1.

The paper had a basis weight of 40.7 g/m², a density 0.85 g/cm³ and a Gurley air resistance of 5 seconds per 100 milliliters. The properties of the honeycomb samples are shown in Table 1.

A 25 cm x 20 cm (10 inch x 8 inch) sample of the paper was dipped in a solution of Plyophen® 23900 phenolic resin. After dipping, an excess of the resin was removed by blotting paper and the impregnated paper was heat treated to cure the resin using a step cure cycle of 15 minutes at 82°C, 15 minutes at 121°C, and 60 minutes at 182°C. The dipping and curing steps were repeated for the second time. The resin content in the final impregnated paper was about 40 wt. % of the total weight of paper plus resin. The measured tensile index was 93 N*m/g.

### Comparative Example 2

A 71 micrometer thick p-aramid fiber paper comprised of 85% KEVLAR® floc and 15% NOMEX® fibrids and made according to United States Patent No. 5,137,768 was used for the production of honeycomb samples similar to Example 1.

The paper had a basis weight of 61.0 g/m², a density 0.85 g/cm³, and a Gurley air resistance of 4 seconds per 100 milliliters. The properties of the honeycomb samples are shown in Table 1.

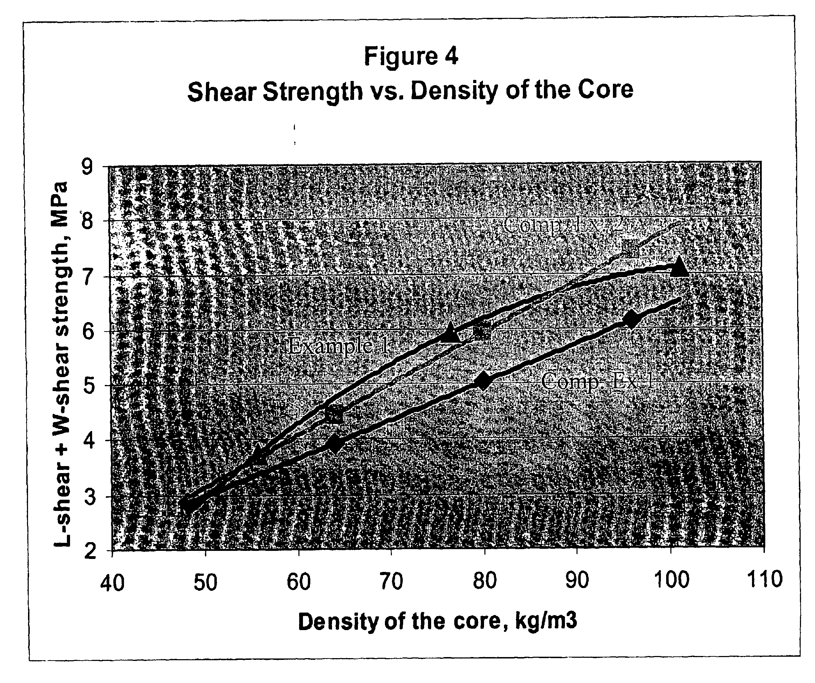

As it can be seen from the data of Table 1 and Figure 4, for the same core density, the honeycomb core of this invention has a surprisingly higher shear strength in comparison with the commercial p-aramid honeycombs based on paper of the same basis weight and consisting of p-aramid floc and m-aramid fibrids, which is produced in accordance with US patent 5,137,768. This unexpectedly superior performance in shear strength is also observed when comparing the invention with examples from the patent literature. For example, the honeycomb core of this invention has much higher shear strength in comparison with those tabulated in US Patent 6,544,622 in which the majority of the p-aramid paper composition in the cell wall is p-aramid pulp with the p-aramid floc content being no higher than 40 wt.% of the total quantity of p-aramid fiber.

Furthermore, the shear strength of the honeycomb of this invention is comparable with that of standard Kevlar® N636 honeycomb based on much heavier paper having much more p-aramid fiber in the same size of cell wall (61 g/m² vs. 40.7 g/m²) as described in Comparative Example 2. This very significant improvement in performance allows an equivalent shear strength in honeycomb core to be achieved from a lower cost solution

The same information about the relative level of shear strength in different cores is highlighted in the last row of Table 1. The average specific shear strength (i. e. the ratio between shear strength and density of the core) for the core of this invention made from paper with a basis weight of 40.7 g/m² is much higher than for the cores made from papers having the same basis weight but containing only p-aramid floc and m-aramid fibrids or comprising p-aramid pulp as the major component of the paper composition. For these papers, a 50% higher paper basis weight of 61 g/m² is required to achieve a honeycomb core of comparable specific shear strength.

**Table 1**

| | Example 1 | Comparative 1 | Comparative 2 | US Patent 6,544,622 |
|---|---|---|---|---|
| | | | | |
| Paper Basis Weight (g/m²) | 40.7 | 40.7 | 61.0 | 38 |
| Core Density (kg/m³) | 56, 77, 101 | 48, 64, 80, 96 | 64, 80, 96 | 48.1 |
| Shear Strength (L+ W) in MPa | 3.75, 5.92, 7.12 | 2.86, 3.93, 5.03, 6.14 | 4.45, 5.93, 7.41 | 2.1 - 2.7 |
| Average Specific Shear Strength [kPa/(kg/m3)] | 72 | 62 | 74 | 44-56 |

## Claims

1. A honeycomb structure comprising a plurality of interconnected walls having surfaces that define a plurality of honeycomb cells, wherein said cell walls are formed from a paper comprising:
a) 10 to 40 parts by weight of para- aramid pulp,
b) 50 to 85 parts by weight of para-aramid floc, and
c) 5 to 30 parts by weight of aramid fibrids

2. A honeycomb structure according to claim 1 wherein the paper, prior to impregnation with resin, has a Gurley air resistance of from 3 to 40 seconds per 100 milliliters.

3. A honeycomb structure according to claim 1 wherein the paper is impregnated with resin.

4. The honeycomb structure of claim 3 wherein the resin is selected from phenolic, polyimide, epoxy and combinations thereof.

5. A honeycomb structure according to claim 3 wherein the cell wall, after impregnation with resin, has a paper to resin weight ratio in the range from about 7:3 to about 2:8.

6. A structural sandwich panel comprising a resin impregnated honeycomb core having at least one facesheet attached to both exterior surfaces of said core wherein the cell walls of the core are formed from a paper comprising:
a) 10 to 40 parts by weight of para- aramid pulp,
b) 50 to 85 parts by weight of para-aramid floc, and
c) 5 to 30 parts by weight of aramid fibrids

7. A sandwich panel according to claim 6 wherein the cell wall of the honeycomb core has a paper to resin weight ratio in the range from about 7:3 to about 2:8.

8. The sandwich panel according to claim 6 wherein said facesheets are made from resin impregnated fiber or metal.

## Patentansprüche

1. Wabengefüge umfassend eine Mehrzahl von miteinander verbundenen Wänden, die Oberflächen aufweisen, die eine Mehrzahl von Wabenzellen definieren, wobei die Zellwände aus einem Papier gebildet sind, das Folgendes umfasst:
a) 10 bis 40 Gewichtsteile Para-Aramidpulpe,
b) 50 bis 85 Gewichtsteile Para-Aramidflocke und
c) 5 bis 30 Gewichtsteile Aramidfibride.

2. Wabengefüge nach Anspruch 1, wobei das Papier vor dem Imprägnieren mit Harz einen Gurley-Luftwiderstand von 3 bis 40 Sekunden pro 100 Milliliter aufweist.

3. Wabengefüge nach Anspruch 1, wobei das Papier mit Harz imprägniert ist.

4. Wabengefüge nach Anspruch 3, wobei das Harz unter Phenol-, Polyimid-, Epoxidharz und Kombinationen davon ausgewählt wird.

5. Wabengefüge nach Anspruch 3, wobei die Zellwand nach dem Imprägnieren mit Harz ein Verhältnis von Papier zu Harz im Bereich von etwa 7:3 bis etwa 2:8 aufweist.

6. Strukturelle Sandwichplatte umfassend einen harzimprägnierten Wabenkern, bei dem mindestens eine Außenplatte an beiden Außenflächen des Kerns befestigt ist, wobei die Zellwände des Kerns aus einem Papier gebildet sind, das Folgendes umfasst:
a) 10 bis 40 Gewichtsteile Para-Aramidpulpe,
b) 50 bis 85 Gewichtsteile Para-Aramidflocke und
c) 5 bis 30 Gewichtsteile Aramidfibride.

7. Sandwichplatte nach Anspruch 6, wobei die Zellwand des Wabenkerns ein Verhältnis von Papier zu Harz im Bereich von etwa 7:3 bis etwa 2:8 aufweist.

8. Sandwichplatte nach Anspruch 6, wobei die Außenplatten aus harzimprägnierter Faser oder Metall hergestellt sind.

## Revendications

1. Structure en nid d'abeilles comprenant une pluralité de parois interreliées ayant des surfaces qui définissent une pluralité d'alvéoles en nid d'abeilles, dans laquelle lesdites parois des alvéoles sont formées d'un papier comprenant:
a) 10 à 40 parties en poids de pâte de para-aramide,
b) 50 à 85 parties en poids de flocons de para-aramide, et
c) 5 à 30 parties en poids de fibrides d'aramide.

2. Structure en nid d'abeilles selon la revendication 1, dans laquelle le papier, avant l'imprégnation avec de la résine, a une résistance de Gurley à l'air de 3 à 40 secondes pour 100 millilitres.

3. Structure en nid d'abeilles selon la revendication 1, dans laquelle le papier est imprégné de résine.

4. Structure en nid d'abeilles selon la revendication 3, dans laquelle la résine est sélectionnée parmi la résine phénolique, de polyimide, époxyde et leurs combinaisons.

5. Structure en nid d'abeilles selon la revendication 3, dans laquelle la paroi des alvéoles, après imprégnation avec la résine, a un rapport en poids du papier sur la résine situé dans la plage d'environ 7:3 à environ 2:8.

6. Panneau structurel de type sandwich comprenant une âme en nid d'abeilles imprégnée de résine ayant au moins une feuille avant fixée aux deux surfaces extérieures de ladite âme, dans lequel les parois des alvéoles de l'âme sont formées d'un papier comprenant:
a) 10 à 40 parties en poids de pâte de para-aramide,
b) 50 à 85 parties en poids de flocons de para-aramide, et
c) 5 à 30 parties en poids de fibrides d'aramide.

7. Panneau de type sandwich selon la revendication 6, dans lequel la paroi des alvéoles de l'âme en nid d'abeilles a un rapport en poids du papier sur la résine situé dans la plage d'environ 7:3 à environ 2:8.

8. Panneau de type sandwich selon la revendication 6, dans lequel lesdites feuilles avant sont fabriquées à partir de fibre ou de métal imprégné(e) de résine.
